# EUROPEAN PATENT APPLICATION

(11) **EP 4 844 108 A1**
(43) Date of publication of application: **25.11.2026**
(21) Application number: 25789704.1
(22) Date of filing: 31.03.2025
(51) Int. Cl.: C25B 9/00, C25B 1/042, C25B 9/23, C25B 9/67

(54) **ELECTROLYTIC CELL STACK, ELECTROLYTIC CELL CARTRIDGE, ELECTROLYTIC CELL MODULE, AND METHOD FOR MANUFACTURING ELECTROLYTIC CELL STACK**

(30) Priority: 19.04.2024 JP 2024068524
(71) Applicant: MITSUBISHI HEAVY INDUSTRIES, LTD., Tokyo 100-8332 (JP); Mitsubishi Power, Ltd., Tokyo 100-8332 (JP)
(72) Inventor: HIWATASHI, Kenichi, Tokyo 100-8332 (JP); YOSHIDA, Shin, Tokyo 100-8332 (JP); TAKENOBU, Koichi, Tokyo 100-8332 (JP); SUEMORI, Shigenori, Tokyo 100-8332 (JP); KOBAYASHI, Daigo, Tokyo 100-8332 (JP)
(74) Representative: Müller Schupfner & Partner Patent- und Rechtsanwaltspartnerschaft mbB (Muc)
(86) International application number: PCT/JP2025/013292
(87) International publication number: WO 2025/220485

(57) **Abstract**

The present disclosure provides an electrolytic cell stack capable of increasing the amount of product generated by electrolysis while suppressing a temperature rise of the cell stack. An electrolytic cell stack (101) according to the present disclosure comprises: a hydrogen generation unit (10) provided with an electrolytic cell (105) having a hydrogen electrode, an oxygen electrode, and a solid electrolyte membrane; a raw material gas supply port (11); a hydrogen gas discharge port (12); a raw material gas supply-side heat exchange unit (13); and a hydrogen gas discharge-side heat exchange unit (14). The raw material gas supply-side heat exchange unit and the hydrogen gas discharge-side heat exchange unit are each composed of a heat transfer unit and a header unit. The heat transfer unit area of the hydrogen gas discharge-side heat exchange unit is larger than the heat transfer unit area of the raw material gas supply-side heat exchange unit.

## Description

### Technical Field

The present disclosure relates to an electrolysis cell stack, an electrolysis cell cartridge, an electrolysis cell module, and a method for manufacturing an electrolysis cell stack.

### Background Art

Water electrolysis, in which water is electrochemically decomposed to generate hydrogen and oxygen, is a hydrogen production method that does not involve emission of carbon dioxide and has excellent environmental characteristics, and includes alkaline electrolysis and polymer electrolyte electrolysis, in which liquid water is electrolyzed, steam electrolysis, in which steam is electrolyzed, and the like.

Among these, a solid oxide electrolysis cell (SOEC; hereinafter, referred to as "electrolysis cell"), which electrolyzes high-temperature steam, uses ceramics having oxygen ion conductivity, such as yttria-stabilized zirconia, as an electrolyte, and can use thermal energy of the high-temperature steam as part of energy required for an electrolysis reaction, and therefore hydrogen can be produced with higher efficiency than in other electrolysis methods.

PTL 1 discloses a hydrogen generation system including a cell stack in which a plurality of electrolysis cells each having a cathode, a solid electrolyte, and an anode are arranged on a substrate tube. In the SOEC disclosed in PTL 1, the cathode is made of an oxide of a composite material of Ni and a zirconia-based electrolyte material.

### Citation List

### Patent Literature

[PTL 1] Japanese Patent No. 7282968

### Summary of Invention

### Technical Problem

In SOEC, it is desired to increase an amount of hydrogen generated per single cell.

When a current flowing through the SOEC is increased, electrochemical decomposition of water (electrolysis) is promoted, and an amount of hydrogen generated can be increased. However, for the following reasons, in a case where an electrolysis current is increased such that an electrolysis voltage is equal to or higher than a thermal neutral potential, it is necessary to consider cell durability and an allowable temperature of a metallic material.

When a current flows through the SOEC, Joule heat is generated due to an internal resistance of the cell; however, the electrolysis of water is an endothermic reaction, and when the current is low, the endothermic reaction is dominant, so that a problem of temperature rise does not occur. However, when the SOEC is operated at a high current that causes the electrolysis voltage to be equal to or higher than the thermal neutral potential, the cell temperature rises due to heat generation caused by Joule heat associated with the electrolysis reaction. When the SOEC is exposed to a high temperature, nickel in the cathode undergoes sintering, and therefore an internal resistance of the SOEC gradually increases. Since stable electrolysis over a long period of time becomes difficult, a maximum cell temperature needs to be managed to be equal to or lower than an allowable value.

In steam electrolysis of the SOEC, in order to reduce the internal resistance of the cell, it is required to make a temperature of a reaction portion as uniform as possible and to keep a maximum temperature equal to or lower than an allowable temperature. The SOEC is usually operated at a high current equal to or higher than a thermal neutral point in order to achieve thermal self-sustaining operation of a cell stack, and is operated at a higher current than an operating current of a fuel cell, which is the reverse reaction. Along with this, a supply gas flow rate also increases, and therefore a gas temperature on an outlet side of a feed gas (steam) flow tends to increase. In order to make the operating temperature of the electrolysis cell (reaction portion) as uniform as possible, maintain a maximum temperature equal to or lower than a set temperature, and suppress a temperature of exhaust gas from the cell stack to be equal to or lower than an allowable temperature of components provided on a downstream side of the cell stack, it is necessary to provide appropriate heat exchange sections on an inlet side and an outlet side.

On the other hand, in the heat exchange sections, it is necessary to seal gas supplied to or exhausted from the cell stack. Therefore, it is desirable that the heat exchange sections are made of a metallic material having high-temperature durability and have a structure integrated with the electrolysis cells. For example, in a flat-plate cell stack, a temperature of gas exhausted from an SOEC cell stack can be reduced by adopting a stack structure in which flat-plate heat exchangers each including a heat transfer section and a gas header section are integrated above and below stacked electrolysis cells (reaction portion).

In addition, in a cylindrical SOEC stack, a stack structure including heat exchange sections on both sides of an electrolysis cell reaction portion formed on the same substrate tube is possible. However, metallic holding members (seal members) for gas sealing between the feed gas and the oxidizing gas are required at both end portions of the cell stack. When the holding members are exposed to a high temperature for a long period of time, durability decreases due to oxidative corrosion. Therefore, an electrolysis current flowing through the SOEC is limited to a range in which the holding members do not exceed an allowable temperature.

The present disclosure has been made in view of such circumstances, and an object of the present disclosure is to provide an electrolysis cell stack, an electrolysis cell cartridge, an electrolysis cell module, and a method for manufacturing an electrolysis cell stack, which are capable of increasing an amount of hydrogen generated by electrolysis while suppressing, within allowable ranges, temperature rises of exhaust gas from heat exchange sections provided on an inlet side and an outlet side of an SOEC cell stack and holding members for gas sealing.

### Solution to Problem

In order to solve the above-described problem, the electrolysis cell stack, the electrolysis cell cartridge, the electrolysis cell module, and the method for manufacturing an electrolysis cell stack of the present disclosure adopt the following means.

The present disclosure provides an electrolysis cell stack including: a hydrogen generation section that includes an electrolysis cell having a cathode containing nickel, an anode, and a solid electrolyte sandwiched between the cathode and the anode; a feed gas supply port that supplies a feed gas to the cathode of the hydrogen generation section; a hydrogen gas exhaust port that exhausts hydrogen gas generated in the hydrogen generation section; a feed gas supply-side heat exchange section in which the feed gas and an oxidizing gas exhausted from an anode side exchange heat, the feed gas supply-side heat exchange section being provided on a side closer to the feed gas supply port than the hydrogen generation section; and a hydrogen gas exhaust-side heat exchange section in which the hydrogen gas and an oxidizing gas supplied to the anode side exchange heat, the hydrogen gas exhaust-side heat exchange section being provided on a side closer to the hydrogen gas exhaust port than the hydrogen generation section, in which the feed gas supply-side heat exchange section and the hydrogen gas exhaust-side heat exchange section each include a heat transfer section and a header section, and a heat transfer area of the hydrogen gas exhaust-side heat exchange section is larger than a heat transfer area of the feed gas supply-side heat exchange section.

The present disclosure provides an electrolysis cell cartridge including the electrolysis cell stack described above.

The present disclosure provides an electrolysis cell module including the electrolysis cell cartridge described above.

The present disclosure provides a method for manufacturing an electrolysis cell stack including: a hydrogen generation section that includes an electrolysis cell having a cathode containing nickel, an anode, and a solid electrolyte sandwiched between the cathode and the anode; a feed gas supply port that supplies a feed gas to the cathode of the hydrogen generation section; a hydrogen gas exhaust port that exhausts a hydrogen gas generated in the hydrogen generation section; a feed gas supply-side heat exchange section in which the feed gas and an oxidizing gas exhausted from an anode side exchange heat, the feed gas supply-side heat exchange section being provided on a side closer to the feed gas supply port than the hydrogen generation section; and a hydrogen gas exhaust-side heat exchange section in which the hydrogen gas and an oxidizing gas supplied to the anode side exchange heat, the hydrogen gas exhaust-side heat exchange section being provided on a side closer to the hydrogen gas exhaust port than the hydrogen generation section, the method including forming the feed gas supply-side heat exchange section and the hydrogen gas exhaust-side heat exchange section such that the feed gas supply-side heat exchange section and the hydrogen gas exhaust-side heat exchange section each include a heat transfer section and a header section, and a heat transfer area of the hydrogen gas exhaust-side heat exchange section is larger than a heat transfer area of the feed gas supply-side heat exchange section.

### Advantageous Effects of Invention

According to the present disclosure, by making the heat transfer area of the hydrogen gas exhaust-side heat exchange section larger than the heat transfer area of the feed gas supply-side heat exchange section, an amount of heat for cooling a hydrogen gas generated in the hydrogen generation section can be increased. As a result, it is possible to keep a temperature of hydrogen gas exhausted from the hydrogen gas exhaust port lower than before.

High-temperature steam used as a raw material of the SOEC does not cause a chemical reaction involving heat absorption in the feed gas supply-side heat exchange section. For this reason, even when the heat transfer area of the feed gas supply-side heat exchange section becomes small, there is no temperature decrease due to an endothermic reaction. Since a temperature of the feed gas rises due to heat exchange with the oxidizing gas, an operating temperature of the electrolysis cell stack can be increased. When the operating temperature is high, an internal resistance of the cell decreases, and therefore power required for hydrogen generation per unit flow rate can be reduced.

Such an electrolysis cell stack makes it possible to keep a maximum temperature of the cell stack within an allowable range and to perform control such that the hydrogen gas exhausted from the electrolysis cell stack and holding members of the stack do not exceed allowable temperatures, even when a current density applied to the hydrogen generation section increases.

### Brief Description of Drawings

FIG. 1 is a view showing one aspect of a cylindrical electrolysis cell stack according to an embodiment of the present disclosure.
FIG. 2 is an enlarged schematic cross-sectional view of an end portion of a feed gas supply-side heat exchange section of the cell stack.
FIG. 3 is a view showing one aspect of a cross section of an electrolysis cell cartridge according to an embodiment of the present disclosure.
FIG. 4 is a view showing one aspect of an electrolysis cell module according to an embodiment of the present disclosure.
FIG. 5 is a view showing a relationship between an operating temperature of a cell stack and IV characteristics.
FIG. 6 is a predicted temperature distribution diagram of the cell stack, supply steam, and oxidizing gas in Example 1 and Comparative Example 1.
FIG. 7 is a diagram showing test conditions and simulation results of Examples 2 to 4 and Comparative Examples 2 and 3.
FIG. 8 is a diagram showing test conditions and simulation results of Examples 5 to 7 and Comparative Examples 4 and 5.
FIG. 9 is a diagram showing test conditions and simulation results of Examples 8 to 10 and Comparative Examples 6 and 7.
FIG. 10 is a diagram showing test conditions and simulation results of Examples 11 to 13 and Comparative Examples 8 and 9.
FIG. 11 is a diagram showing test conditions and simulation results of Examples 14 to 16 and Comparative Examples 10 and 11.
FIG. 12 is a view in which a hydrogen generation amount is organized with, as a horizontal axis, a ratio (L₃/L₁) of a length (L₃) of the lower heat exchange section to a heat transfer length (L₁) of the upper heat exchange section.

### Description of Embodiments

Embodiments of the electrolysis cell stack, the electrolysis cell cartridge, the electrolysis cell module, and the method for manufacturing an electrolysis cell stack according to the present disclosure will be described below with reference to the drawings.

In the present embodiment, "electrolysis" means "steam electrolysis."

In the following, for convenience of description, positional relationships of components described using the expressions "upper" and "lower" with reference to the plane of the paper indicate an upper side in the vertical direction and a lower side in the vertical direction, respectively. In addition, in the present embodiment, for a configuration that achieves the same advantageous effect in the up-down direction and the horizontal direction, the up-down direction on the paper surface is not necessarily limited to the vertical up-down direction, and may correspond to, for example, a horizontal direction orthogonal to the vertical direction.

### (Cell Stack)

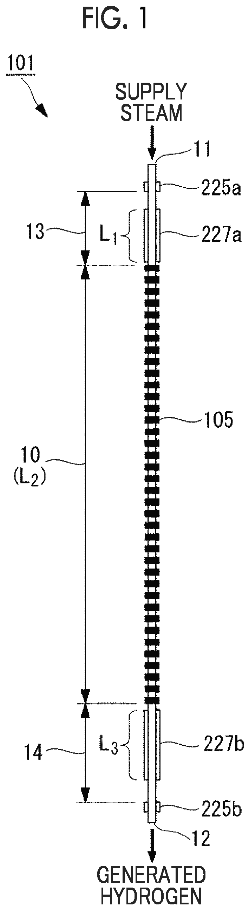

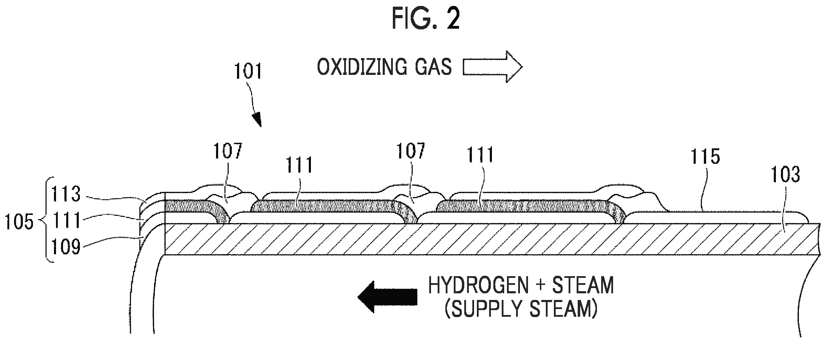

First, with reference to FIGS. 1 and 2, a cylindrical electrolysis cell stack using a substrate tube will be described as an example according to the present embodiment. When the substrate tube is not used, for example, the cathode may be formed to have a large thickness and may also serve as the substrate tube, and the present embodiment is not limited to the use of the substrate tube. Although the substrate tube in the present embodiment is described as having a cylindrical shape, the substrate tube only needs to be tubular and is not necessarily limited to having a circular cross section; for example, the substrate tube may have an elliptical shape. A cell stack having a flat tubular shape or the like obtained by vertically flattening a peripheral side surface of a cylinder may be used. In addition, a stack structure in which a plurality of flat-plate electrochemical single cells, separators, and flat-plate heat exchange sections are stacked may be used.

FIG. 1 is a schematic view showing one aspect of the cell stack (cylindrical electrolysis cell stack) according to the present embodiment. A cell stack 101 includes a hydrogen generation section 10 at a central portion in a longitudinal direction. The cell stack 101 has a feed gas supply port 11 and a hydrogen gas exhaust port 12. The cell stack 101 includes a feed gas supply-side heat exchange section (hereinafter, referred to as an upper heat exchange section) 13 and a hydrogen gas exhaust-side heat exchange section (hereinafter, referred to as a lower heat exchange section) 14 so as to sandwich the hydrogen generation section 10 from both sides in the longitudinal direction.

As a feed gas that can be supplied to and used at the cathode of the cell stack 101, a gas that serves as a source of hydrogen in the hydrogen generation section 10 and does not cause an endothermic reaction in the upper heat exchange section 13 and the lower heat exchange section 14 is used, and the feed gas in the present embodiment is steam. A gas supplied to the feed gas supply port 11 often contains hydrogen in addition to steam used for electrolysis. In addition, the gas exhausted from the hydrogen gas exhaust port 12 may contain steam, which is a remainder of the feed gas, in addition to hydrogen gas generated in the hydrogen generation section 10; however, in the following description, in order to avoid confusion, the supply gas containing hydrogen is also referred to as "supply steam", and the hydrogen gas containing the residual steam is also referred to as "generated hydrogen".

The upper heat exchange section 13 is located on the feed gas supply port (steam supply port) 11 side of the hydrogen generation section 10. The upper heat exchange section 13 is a region where the supply steam supplied into the cell stack 101 from the steam supply port 11 exchanges heat with an oxidizing gas flowing outside the cell stack 101 before entering the hydrogen generation section 10. The upper heat exchange section 13 may include a lead section (lead film 115 described later) electrically connected to the hydrogen generation section 10. Specifically, the upper heat exchange section 13 is a region from an end portion (outer end) of the electrolysis cell 105 on the feed gas supply port (steam supply port) 11 side formed in the cell stack 101 to an upper tube plate 225a described later. The upper heat exchange section 13 does not include a portion from the upper tube plate 225a to an upper end of the cell stack 101. In addition, the upper heat exchange section 13 is not necessarily molded integrally with the hydrogen generation section 10, and may be a structure or a heat exchanger having a heat exchange function between the oxidizing gas and the supply steam.

In the upper heat exchange section 13, an oxidizing gas upper through portion 235b described later, in which heat exchange between the feed gas and the oxidizing gas is performed, is defined as a heat transfer section (L₁). The oxidizing gas upper through portion 235b is a passage for the oxidizing gas, which is formed between an outer surface of the cell stack 101 and an upper insulation board 227a described later, and is a region where heat exchange between the feed gas and the oxidizing gas is performed. That is, the upper heat exchange section 13 is a region obtained by combining a region from the end portion (outer end) of the electrolysis cell 105 on the feed gas supply port (steam supply port) 11 side formed in the cell stack 101 to the oxidizing gas upper through portion 235b (heat transfer section L₁), the heat transfer section (L₁), and a portion passing through an oxidizing gas exhaust header 223.

The lower heat exchange section 14 is located on the hydrogen gas exhaust port (generated hydrogen outlet) 12 side of the hydrogen generation section 10. The lower heat exchange section 14 is a region where the hydrogen gas (generated hydrogen) generated in the hydrogen generation section 10 and an oxidizing gas flowing outside the cell stack 101 exchange heat. The lower heat exchange section 14 may include a lead section (lead film 115 described later) electrically connected to the hydrogen generation section 10. Specifically, the lower heat exchange section 14 is a region from an end portion (outer end) of the electrolysis cell 105 on the hydrogen gas exhaust port (generated hydrogen outlet) 12 side formed in the cell stack 101 to a lower tube plate 225b described later. The lower heat exchange section 14 does not include a portion from the lower tube plate 225b to a lower end of the cell stack 101. In addition, the lower heat exchange section 14 is not necessarily molded integrally with the hydrogen generation section 10, and may be a structure or a heat exchanger having a heat exchange function between the oxidizing gas and the hydrogen gas (generated hydrogen).

In the lower heat exchange section 14, an oxidizing gas lower through portion 235a in which heat exchange between the hydrogen gas (generated hydrogen) and the oxidizing gas is performed is defined as a heat transfer section (L₃). The oxidizing gas lower through portion 235a is a passage for the oxidizing gas, which is formed between an outer surface of the cell stack 101 and a lower insulation board 227b described later, and is a region where heat exchange between the hydrogen gas (generated hydrogen) and the oxidizing gas is performed. In other words, the lower heat exchange section 14 is a region obtained by combining a region from the end portion (outer end) of the electrolysis cell 105 on the hydrogen gas exhaust port (generated hydrogen outlet) 12 side formed in the cell stack 101 to an inlet of the oxidizing gas lower through portion 235a, the heat transfer section (L₃) in the oxidizing gas lower through portion, and a portion passing through the oxidizing gas supply header 221.

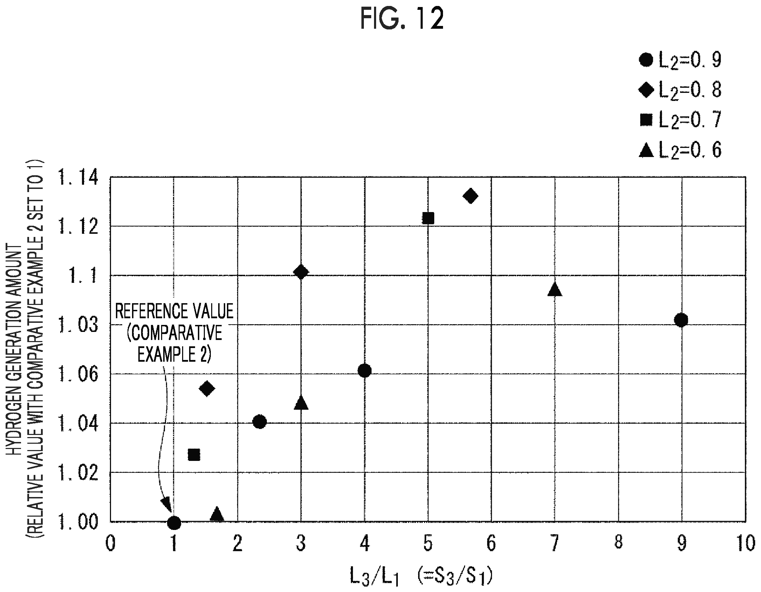

A heat transfer area (S₃) of the heat transfer section (L₃) of the lower heat exchange section 14 is larger than a heat transfer area (S₁) of the heat transfer section (L₁) of the upper heat exchange section 13. From FIG. 12 described later, a ratio (S₃/S₁) of the heat transfer area (S₃) of the heat transfer section (L₃) of the lower heat exchange section 14 to the heat transfer area (S₁) of the heat transfer section (L₁) of the upper heat exchange section 13 is preferably 2 or more, more preferably 3 or more and 9 or less, and still more preferably 3 or more and 7 or less.

Here, an effective section area (S) of the cell stack 101 is a sum of the heat transfer area (S₁) of the upper heat exchange section 13, a reaction area (S₂) of the hydrogen generation section 10, and the heat transfer area (S₃) of the lower heat exchange section 14. $\begin{matrix}Effective section area \left(S\right) of electrolysis cell stack = Heat transfer area \left({S}_{1}\right) of \\ upper heat exchange section \\ + reaction area \left({S}_{2}\right) of hydrogen generation section + heat transfer area \left({S}_{3}\right) of \\ lower heat exchange section\end{matrix}$

When a diameter of the substrate tube 103 is uniform, the heat transfer area may be considered in terms of length.

A length (L) of an effective section of the cell stack 101 is a sum of a heat transfer length (L₁) of the upper heat exchange section 13, a length (L₂) of the hydrogen generation section 10, and a heat transfer length (L₃) of the lower heat exchange section 14. $\begin{matrix}Effective section length \left(L\right) of electrolysis cell stack = heat transfer length \left({L}_{1}\right) \\ of upper heat exchange section \\ + length \left({L}_{2}\right) of hydrogen generation section + heat transfer length \left({L}_{3}\right) of \\ lower heat exchange section\end{matrix}$

When a diameter of the substrate tube 103 is uniform, the heat transfer length (L₃) of the lower heat exchange section 14 is larger than the heat transfer length (L₁) of the upper heat exchange section 13. A ratio (L₃/L₁) of the heat transfer length (L₃) of the lower heat exchange section 14 to the heat transfer length (L₁) of the upper heat exchange section 13 is preferably 2 or more, more preferably 3 or more and 9 or less, and still more preferably 3 or more and 7 or less.

FIG. 2 shows an enlarged schematic cross-sectional view of an end portion of the hydrogen generation section in the cell stack. The hydrogen generation section 10 is formed on an outer peripheral surface of the cylindrical substrate tube 103. A diameter (outer diameter and inner diameter) of the substrate tube 103 may be uniform in the longitudinal direction. The outer diameter of the substrate tube 103 is, for example, 10 mm to 50 mm. An overall length of the substrate tube 103 is, for example, 500 mm to 3000 mm.

The hydrogen generation section 10 includes a plurality of electrolysis cells 105 arranged in an axial direction of the substrate tube 103, and interconnectors 107 formed between adjacent electrolysis cells 105.

The electrolysis cell 105 is formed by stacking a cathode 109, a solid electrolyte 111, and an anode 113. The solid electrolyte 111 is sandwiched between the cathode 109 and the anode 113.

The cell stack 101 includes a lead film 115 electrically connected, through the interconnector 107, to the anode 113 of the electrolysis cell 105 formed at one outermost end in the axial direction of the substrate tube 103 among the plurality of electrolysis cells 105 formed on the outer peripheral surface of the substrate tube 103, and includes a lead film 115 electrically connected to the cathode 109 of the electrolysis cell 105 formed at the other outermost end. An outer end of the anode 113 of the electrolysis cell 105 positioned at the outermost end serves as the end portion of the hydrogen generation section 10.

The substrate tube 103 is made of a porous material and contains, as a main component, for example, CaO-stabilized ZrO₂ (CSZ), a mixture of CSZ and nickel oxide (NiO) (CSZ+NiO), Y₂O₃-stabilized ZrO₂ (YSZ), MgAl₂O₄, or the like. The substrate tube 103 supports the electrolysis cell 105, the interconnector 107, and the lead film 115, and diffuses supply steam supplied to an inner peripheral surface of the substrate tube 103 to the cathode 109 formed on the outer peripheral surface of the substrate tube 103 through pores of the substrate tube 103. Openings at both ends of the substrate tube 103 may serve as a steam supply port and a generated hydrogen outlet.

The cathode 109 is made of an oxide of a composite material of nickel and a zirconia-based electrolyte material, and, for example, Ni/YSZ is used. A thickness of the cathode 109 is 50 µm to 250 µm, and the cathode 109 may be formed by screen-printing a slurry.

As the solid electrolyte 111, YSZ having airtightness that makes it difficult for gas to pass and high oxygen ionic conductivity at high temperature is mainly used. The solid electrolyte 111 allows oxygen ions (O²⁻) generated at the cathode 109 to move to the anode 113. A film thickness of the solid electrolyte 111 located on the surface of the cathode 109 is 5 µm to 100 µm, and the solid electrolyte 111 may be formed by screen-printing a slurry.

The anode 113 is made of, for example, a LaSrMnO₃-based oxide or a LaCoO₃-based oxide. The anode 113 is applied by screen-printing a slurry or by using a dispenser.

The anode 113 may have a two-layer configuration. In this case, an anode layer (anode intermediate layer) on the solid electrolyte 111 side is made of a material that exhibits high ionic conductivity and has excellent catalytic activity. The anode intermediate layer may be made of Sm-doped ceria exhibiting high ionic conductivity, and an anode layer (anode conductive layer) on the anode intermediate layer may be made of a perovskite oxide such as Sr-doped LaMnO₃ and Ca-doped LaMnO₃.

By applying a negative voltage to the cathode 109 and a positive voltage to the anode 113, steam contained in the supply steam receives electrons and is electrolyzed at the cathode 109 to generate hydrogen molecules and oxygen ions (O²⁻) (see the reaction formula (1) below). The generated hydrogen is taken out to the outside together with the supply steam.

On the other hand, the oxygen ions pass through the solid electrolyte 111 due to a difference in electric potential, move to the anode 113, release electrons, and become oxygen molecules (see the reaction formula (2) below). The generated oxygen is exhausted to the outside together with the oxidizing gas supplied to the anode 113.

H₂O + 2e⁻ → H₂ + O²⁻ ... (1)

2O²⁻ → O₂ + 4e⁻ ... (2)

The oxidizing gas does not directly participate in the electrolysis reaction, but supplies heat required for the electrolysis reaction (endothermic) and exhausts excess heat generated in the electrolysis reaction. The oxidizing gas is usually a gas containing approximately 15% to 30% oxygen, and typically air is suitable; but in addition to air, a mixed gas of combustion exhaust gas and air, a mixed gas of oxygen and air, an inert gas such as nitrogen, or the like can also be used.

The interconnector 107 is made of a conductive perovskite oxide represented by M₁₋ₓLₓTiO₃ (M is an alkaline earth metal element and L is a lanthanoid element), such as a SrTiO₃-based oxide, and is formed by screen-printing a slurry. The interconnector 107 is formed as a dense film so that the supply steam supplied to the cathode 109 and the oxidizing gas supplied to the anode 113 do not mix with each other. In addition, the interconnector 107 has stable durability and electrical conductivity under both an oxidizing atmosphere and a reducing atmosphere. The interconnector 107 electrically connects the anode 113 of one of adjacent electrolysis cells 105 to the cathode 109 of the other of the adjacent electrolysis cells 105, thereby connecting the adjacent electrolysis cells 105 to each other in series.

Since the lead film 115 needs to have electronic conductivity and to have a thermal expansion coefficient close to those of other materials constituting the cell stack 101, the lead film 115 is made of a composite material of nickel and a zirconia-based electrolyte material, such as Ni/YSZ, or M₁₋ₓLₓTiO₃ (M is an alkaline earth metal element and L is a lanthanoid element), such as a SrTiO₃-based material. The lead film 115 supplies direct-current power to the plurality of electrolysis cells 105 connected in series by the interconnector 107. In addition, the surface on the oxidizing gas side may be protected with an airtight material having oxidation resistance so that a metallic material such as Ni is not oxidized.

A part of the lead film 115 may be on the upper heat exchange section 13 (or the lower heat exchange section 14). In this case, the upper heat exchange section 13 (or the lower heat exchange section 14) has a function of allowing a current to flow.

Next, a method for manufacturing the cell stack will be described.

The substrate tube 103 is formed by, for example, an extrusion molding method.

The outer peripheral surface of the substrate tube 103 is divided, along the axial direction (longitudinal direction), into an upper heat exchange section region, a hydrogen generation section region, and a lower heat exchange section region. The hydrogen generation section region is disposed at an axial central portion of the substrate tube 103; the upper heat exchange section region is disposed on the feed gas supply port side of the hydrogen generation section region; and the lower heat exchange section region is disposed on the generated hydrogen outlet side of the hydrogen generation section region.

The upper heat exchange section region and the lower heat exchange section region are set such that the heat transfer area (S₃) of the lower heat exchange section is larger than the heat transfer area (S₁) of the upper heat exchange section. The ratio (S₃/S₁) of the heat transfer area (S₃) of the lower heat exchange section to the heat transfer area (S₁) of the upper heat exchange section is set to 2 or more, preferably 3 or more and 9 or less, and more preferably 3 or more and 7 or less.

When the diameter of the substrate tube 103 is uniform in the longitudinal direction, the "heat transfer (section) area" may be converted into "length", and the heat transfer length of the upper heat exchange section, the hydrogen generation section length, and the heat transfer length of the lower heat exchange section may be determined.

A cathode slurry is applied onto the outer peripheral surface of the substrate tube 103 in the hydrogen generation section region. In addition, a lead film slurry is applied adjacent to the cathode slurry applied at the outermost end. The lead film slurry may straddle the upper heat exchange section region (or the lower heat exchange section region) and the hydrogen generation section region.

After the cathode slurry is applied, a solid electrolyte slurry and an interconnector slurry are sequentially applied.

The substrate tube 103 on which slurry films of the cathode 109, the solid electrolyte 111, the interconnector 107, and the lead film 115 have been formed is co-sintered in air. The sintering temperature is, for example, 1350°C to 1450°C.

Next, an anode slurry is applied onto the co-sintered substrate tube 103. An outer end portion of the anode slurry applied at the outermost end becomes the end portion of the hydrogen generation section region.

The substrate tube 103 on which a slurry film of the anode 113 has been formed is sintered in air. The sintering temperature is, for example, 1100°C to 1250°C. The sintering temperature here is lower than the co-sintering temperature after forming the components from the substrate tube 103 to the interconnector 107.

As a result, the cell stack 101 in which the heat transfer area (S₃) of the lower heat exchange section 14 is larger than the heat transfer area (S₁) of the upper heat exchange section 13 is obtained.

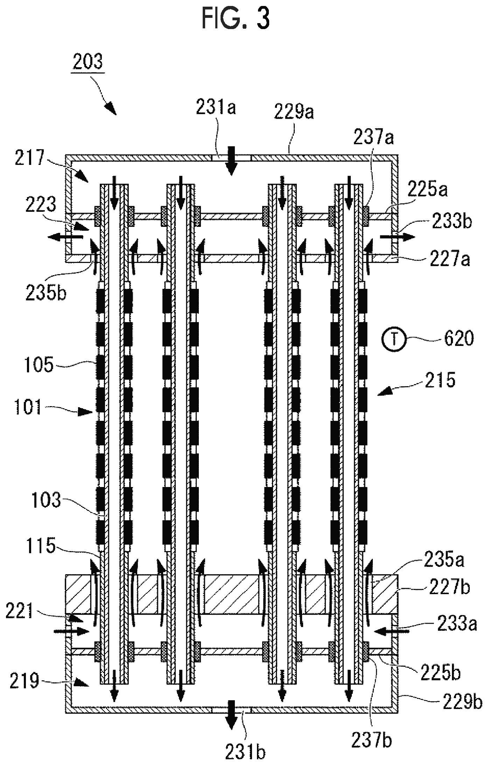

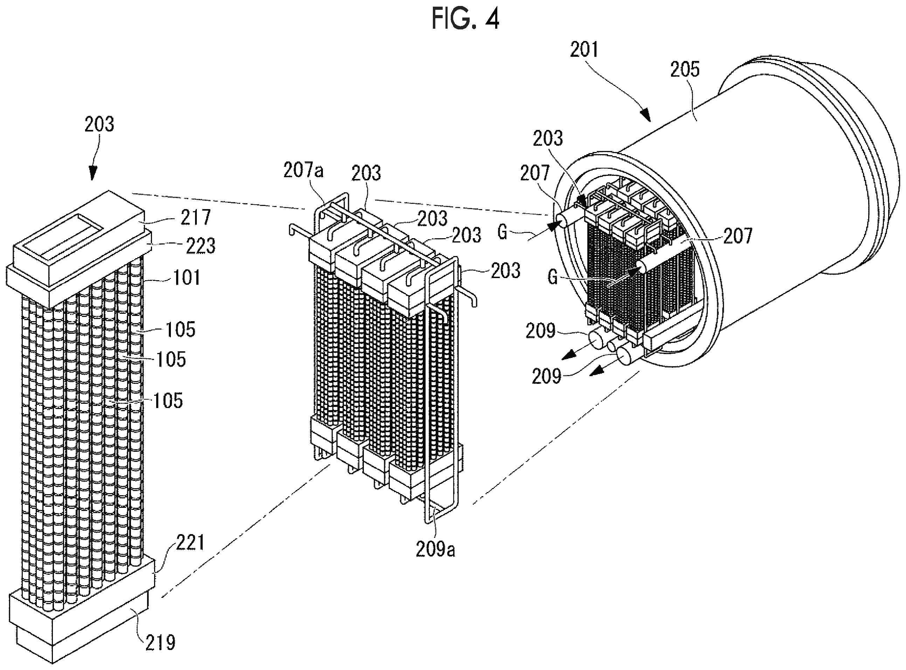

Next, a cartridge (electrolysis cell cartridge) and a module (electrolysis cell module) according to the present embodiment will be described with reference to FIGS. 3 and 4. Here, FIG. 3 shows one aspect of the cartridge according to the present embodiment. In addition, FIG. 4 shows a cross-sectional view of one aspect of the module according to the present embodiment.

### (SOEC Cartridge)

As shown in FIG. 3, a cartridge 203 includes a plurality of cell stacks 101, a steam electrolysis chamber 215, a steam supply header 217, a generated hydrogen exhaust header 219, an oxidizing gas (air) supply header 221, and an oxidizing gas exhaust header 223. In addition, the cartridge 203 includes an upper tube plate 225a, a lower tube plate 225b, an upper insulation board 227a, and a lower insulation board 227b. In the present embodiment, the cartridge 203 has a structure in which the steam supply header 217, the generated hydrogen exhaust header 219, the oxidizing gas supply header 221, and the oxidizing gas exhaust header 223 are arranged as shown in FIG. 2, so that the supply steam and the oxidizing gas flow opposite to each other on the inside and outside of the cell stack 101. However, this is not necessarily required, and, for example, the supply steam and the oxidizing gas may flow in parallel on the inside and outside of the cell stack 101, or the oxidizing gas may flow in a direction orthogonal to the longitudinal direction of the cell stack 101.

In FIG. 3, the upper heat exchange section 13 of the cell stack 101 extends from a lower surface of the upper tube plate 225a to an upper end (outer end) portion of the electrolysis cell 105 positioned uppermost among the plurality of electrolysis cells 105.

In FIG. 3, the lower heat exchange section 14 of the cell stack 101 extends from a lower end (outer end) portion of the electrolysis cell 105 positioned lowermost among the plurality of electrolysis cells 105 to an upper surface of the lower tube plate 225b.

The steam electrolysis chamber 215 is a region formed between the upper insulation board 227a and the lower insulation board 227b. The steam electrolysis chamber 215 is a region where the electrolysis cells 105 of the cell stack 101 are arranged and is a region where steam is electrolyzed to generate hydrogen. In addition, a temperature near a central portion of the steam electrolysis chamber 215 in the longitudinal direction of the cell stack 101 may be monitored by a temperature measurement unit 620 (such as a temperature sensor and a thermocouple), and the steam electrolysis chamber 215 has a high-temperature atmosphere of approximately 700°C to 1000°C during steady operation of an electrolysis cell module 201.

The steam supply header 217 is a region surrounded by an upper casing 229a and the upper tube plate 225a of the SOEC cartridge 203, and communicates with the steam supply branch pipe 207a through a steam supply pipe 231a provided in an upper portion of the upper casing 229a. In addition, the cell stacks 101 are joined to the upper tube plate 225a by upper seal members 237a, and the steam supply header 217 guides steam supplied from the steam supply branch pipe 207a through the steam supply pipe 231a into the insides of the substrate tubes 103 of the cell stacks 101 at substantially uniform flow rates, thereby making hydrogen generation performance of the cell stacks 101 substantially uniform.

The generated hydrogen exhaust header 219 is a region surrounded by the lower casing 229b and the lower tube plate 225b of the cartridge 203, and communicates with the generated hydrogen exhaust branch pipe 209a through the generated hydrogen exhaust pipe 231b provided in the lower casing 229b. In addition, the cell stacks 101 are joined to the lower tube plate 225b by lower seal members 237b, and the generated hydrogen exhaust header 219 collects generated hydrogen supplied to the generated hydrogen exhaust header 219 after passing through the insides of the substrate tubes 103 of the cell stacks 101, and guides the generated hydrogen to the generated hydrogen exhaust branch pipe 209a through the generated hydrogen exhaust pipe 231b.

An oxidizing gas supply pipe (not shown) branches off oxidizing gas at a predetermined flow rate corresponding to an operating temperature of the module 201 to oxidizing gas supply branch pipes (not shown), and supplies the oxidizing gas to the plurality of cartridges 203. The oxidizing gas supply header 221 is a region surrounded by the lower casing 229b, the lower tube plate 225b, and the lower insulation board 227b of the SOEC cartridge 203, and communicates with an oxidizing gas supply branch pipe (not shown) through an oxidizing gas supply pipe 233a provided on a side surface of the lower casing 229b. The oxidizing gas supply header 221 guides the oxidizing gas at a predetermined flow rate, which is supplied from the oxidizing gas supply branch pipe (not shown) through the oxidizing gas supply pipe 233a, to the steam electrolysis chamber 215 through an oxidizing gas lower through portion 235a described later.

The oxidizing gas exhaust header 223 is a region surrounded by the upper casing 229a, the upper tube plate 225a, and the upper insulation board 227a of the SOEC cartridge 203, and communicates with an oxidizing gas exhaust branch pipe (not shown) through an oxidizing gas exhaust pipe 233b provided on a side surface of the upper casing 229a. The oxidizing gas exhaust header 223 guides exhausted oxidizing gas, which is supplied from the steam electrolysis chamber 215 to the oxidizing gas exhaust header 223 through the oxidizing gas upper through portion 235b described later, to the oxidizing gas exhaust branch pipe (not shown) through the oxidizing gas exhaust pipe 233b.

The upper tube plate 225a is fixed to a side plate of the upper casing 229a such that the upper tube plate 225a, a top plate of the upper casing 229a, and the upper insulation board 227a are substantially parallel to each other, between the top plate of the upper casing 229a and the upper insulation board 227a. In addition, the upper tube plate 225a has a plurality of holes corresponding to the number of cell stacks 101 included in the cartridge 203, and the cell stacks 101 are inserted into the holes, respectively. The upper tube plate 225a airtightly supports one end portion of each of the cell stacks 101 through either one or both of the upper seal members 237a and an adhesive member, and separates the steam supply header 217 and the oxidizing gas exhaust header 223 from each other.

The upper insulation board 227a is disposed at a lower end portion of the upper casing 229a such that the upper insulation board 227a, a top plate of the upper casing 229a, and the upper tube plate 225a are substantially parallel to each other, and is fixed to a side plate of the upper casing 229a. In addition, the upper insulation board 227a is provided with a plurality of holes corresponding to the number of cell stacks 101 included in the cartridge 203. A diameter of each hole is set to be larger than an outer diameter of the cell stack 101. The upper insulation board 227a includes an oxidizing gas upper through portion 235b formed between an inner surface of each hole and an outer surface of the cell stack 101 inserted through the upper insulation board 227a. The oxidizing gas upper through portion 235b is a region (heat transfer section L₁) in which heat exchange between the supply steam (feed gas) and the oxidizing gas is performed.

The upper insulation board 227a partitions the steam electrolysis chamber 215 and the oxidizing gas exhaust header 223, and suppresses strength degradation caused by an increase in temperature of an atmosphere around the upper tube plate 225a and an increase in corrosion caused by an oxidant contained in the oxidizing gas. In addition, in order to suppress thermal deformation of the upper tube plate 225a and the like due to a temperature difference when the upper tube plate 225a and the like are exposed to a high temperature in the steam electrolysis chamber 215, a metallic material having high-temperature durability, such as a Ni-based alloy, may be used. The upper insulation board 227a causes exhausted oxidizing gas that has passed through the steam electrolysis chamber 215 and has been exposed to a high temperature to pass through the oxidizing gas upper through portion 235b, and guides the exhausted oxidizing gas to the oxidizing gas exhaust header 223.

Heat exchange between the supply steam and the oxidizing gas in the upper heat exchange section 13 is performed when the oxidizing gas passes through the oxidizing gas upper through portion 235b (heat transfer section L₁ of the upper heat exchange section). In the upper heat exchange section 13, heat exchange in a region other than the heat transfer section L₁ (a region from the end portion (outer end) of the electrolysis cell 105 on the feed gas supply port (steam supply port) 11 side formed in the cell stack 101 to the oxidizing gas upper through portion 235b, and a portion penetrating the oxidizing gas exhaust header 223) is slight and thus can be ignored.

A thickness of the upper insulation board 227a may be changed as appropriate such that the temperature of the upper tube plate 225a is equal to or lower than an allowable temperature, and an amount of heat exchanged can be increased by increasing the thickness of the upper insulation board 227a. A volume of the oxidizing gas exhaust header 223 may be constant regardless of the heat transfer area (length) of the upper heat exchange section 13.

According to the present embodiment, with the structure of the cartridge 203 described above, the supply steam and the oxidizing gas flow opposite to each other on the inside and outside of the cell stack 101. As a result, exhausted oxidizing gas exchanges heat with steam supplied to the steam electrolysis chamber 215 through the inside of the substrate tube 103, whereby the upper tube plate 225a and the like made of a metallic material are cooled to a temperature at which damage due to stress can be prevented, and the exhausted oxidizing gas is supplied to the oxidizing gas exhaust header 223. In addition, the supply steam is heated by heat exchange with the exhausted oxidizing gas exhausted from the steam electrolysis chamber 215, and is supplied to the steam electrolysis chamber 215. As a result, steam preheated to a temperature required for the electrolysis reaction can be supplied to the steam electrolysis chamber 215 without using a heater or the like.

The lower tube plate 225b is fixed to a side plate of the lower casing 229b such that the lower tube plate 225b, a bottom plate of the lower casing 229b, and the lower insulation board 227b are substantially parallel to each other, between the bottom plate of the lower casing 229b and the lower insulation board 227b. In addition, the lower tube plate 225b has a plurality of holes corresponding to the number of cell stacks 101 included in the cartridge 203, and the cell stacks 101 are inserted into the holes, respectively. The lower tube plate 225b airtightly supports the other end portion of each of the cell stacks 101 through either one or both of the lower seal members 237b and an adhesive member, and separates the generated hydrogen exhaust header 219 and the oxidizing gas supply header 221 from each other.

The lower insulation board 227b is disposed in an upper end portion of the lower casing 229b such that the lower insulation board 227b, a bottom plate of the lower casing 229b, and the lower tube plate 225b are substantially parallel to each other, and is fixed to a side plate of the lower casing 229b. In addition, the lower insulation board 227b is provided with a plurality of holes corresponding to the number of cell stacks 101 included in the cartridge 203. A diameter of each hole is set to be larger than an outer diameter of the cell stack 101. The lower insulation board 227b includes an oxidizing gas lower through portion 235a (heat transfer section L₃) formed between an inner surface of each hole and an outer surface of the cell stack 101 inserted through the lower insulation board 227b. The oxidizing gas lower through portion 235a is a region (heat transfer section L₃) in which heat exchange between hydrogen gas (generated hydrogen) and oxidizing gas is performed.

The lower insulation board 227b partitions the steam electrolysis chamber 215 and the oxidizing gas supply header 221, and suppresses strength degradation caused by an increase in temperature of an atmosphere around the lower tube plate 225b and an increase in corrosion caused by an oxidant contained in the oxidizing gas. In addition, in order to suppress thermal deformation of the lower tube plate 225b and the like due to a temperature difference when the lower tube plate 225b and the like are exposed to a high temperature in the steam electrolysis chamber 215, a metallic material having high-temperature durability, such as a Ni-based alloy, may be used. The lower insulation board 227b causes oxidizing gas supplied to the oxidizing gas supply header 221 to pass through the oxidizing gas lower through portion 235a, and guides the oxidizing gas to the steam electrolysis chamber 215.

Heat exchange between the generated hydrogen and the oxidizing gas in the lower heat exchange section 14 is performed when the oxidizing gas passes through the oxidizing gas lower through portion 235a (heat transfer section L₃ of the lower heat exchange section). In the lower heat exchange section 14, heat exchange in a region other than the heat transfer section L₃ (a region from the end portion (outer end) of the electrolysis cell 105 on the generated hydrogen outlet (hydrogen gas exhaust port) 12 side formed in the cell stack 101 to the oxidizing gas lower through portion 235a, and a portion penetrating the oxidizing gas supply header 221) is slight and thus can be ignored.

A thickness of the lower insulation board 227b may be changed as appropriate such that the temperature of the lower tube plate 225b is equal to or lower than an allowable temperature, and an amount of heat exchanged can be increased by increasing the thickness of the lower insulation board 227b. A volume of the oxidizing gas supply header 221 may be constant regardless of the heat transfer area (length) of the lower heat exchange section 14.

According to the present embodiment, with the structure of the cartridge 203 described above, the generated hydrogen and the oxidizing gas flow opposite to each other on the inside and outside of the cell stack 101. As a result, generated hydrogen that has passed through the inside of the substrate tube 103 and has passed through the steam electrolysis chamber 215 exchanges heat with oxidizing gas supplied to the steam electrolysis chamber 215, whereby the lower tube plate 225b and the like made of a metallic material are cooled to a temperature at which damage due to stress can be prevented, and the generated hydrogen is supplied to the generated hydrogen exhaust header 219. In addition, the oxidizing gas is heated by heat exchange with the generated hydrogen, and is supplied to the steam electrolysis chamber 215. As a result, oxidizing gas heated to a temperature required for the electrolysis reaction can be supplied to the steam electrolysis chamber 215 without using a heater or the like.

### (SOEC Module)

As shown in FIG. 4, a module (electrolysis cell module) 201 includes, for example, a plurality of cartridges (electrolysis cell cartridges) 203 and a module vessel 205 that accommodates the plurality of cartridges 203. The module 201 includes a steam supply pipe 207, a plurality of steam supply branch pipes 207a, a generated hydrogen exhaust pipe 209, and a plurality of generated hydrogen exhaust branch pipes 209a. In addition, the module 201 includes an oxidizing gas supply pipe (not shown) and a plurality of oxidizing gas supply branch pipes (not shown).

The steam supply pipe 207 is provided inside the module vessel 205, is connected to a steam supply unit that supplies steam having a predetermined gas composition and a predetermined flow rate corresponding to an amount of hydrogen generated by the module 201, and is connected to the steam supply branch pipes 207a. The steam supply pipe 207 branches off the steam at a predetermined flow rate supplied from the above-described steam supply unit, and guides the steam to the steam supply branch pipes 207a. In addition, the steam supply branch pipes 207a are connected to the steam supply pipe 207 and are connected to the steam supply pipes 231a of the plurality of cartridges 203. The steam supply branch pipes 207a guide the steam supplied from the steam supply pipe 207 to the plurality of cartridges 203 at substantially equal flow rates, thereby making electrolysis voltages of the plurality of cartridges 203 substantially uniform.

The generated hydrogen exhaust branch pipes 209a are connected to the generated hydrogen exhaust pipes 231b of the plurality of cartridges 203 and are connected to the generated hydrogen exhaust pipe 209. The generated hydrogen exhaust branch pipes 209a guide the generated hydrogen exhausted from the cartridges 203 to the generated hydrogen exhaust pipe 209. In addition, the generated hydrogen exhaust pipe 209 is connected to the generated hydrogen exhaust branch pipes 209a, and a part of the generated hydrogen exhaust pipe 209 is disposed outside the module vessel 205. The generated hydrogen exhaust pipe 209 guides generated hydrogen led out from the generated hydrogen exhaust branch pipes 209a at substantially equal flow rates to the outside of the module vessel 205.

The module vessel 205 is operated at an internal pressure from atmospheric pressure to several MPa and a surface temperature from atmospheric temperature to approximately 300°C; and carbon steel or the like is suitable, for example, from the viewpoint of cost reduction.

Here, in the present embodiment, an aspect in which the plurality of cartridges 203 are grouped and accommodated in the module vessel 205 has been described; but the present embodiment is not limited thereto, and, for example, an aspect in which the cartridge 203 is accommodated in the module vessel 205 without the plurality of cartridges 203 being grouped may also be adopted.

Direct-current power required for the electrolysis reaction is supplied to the module by converting supplied power into a predetermined voltage by a power conversion device such as a power conditioner. The power supplied to the module is fed according to the number of cartridges connected in series and the number of cartridges connected in parallel. In each cartridge 203, the power is fed to a power feeding member (not shown) through a power feeding plate (not shown), conducted to the vicinity of the end portion of the cell stack 101 by the lead film 115 made of Ni/YSZ or the like provided in the plurality of electrolysis cells 105, and then supplied to the plurality of electrolysis cells.

Next, a basis for setting the heat transfer areas (lengths) of the upper heat exchange section, the lower heat exchange section, and the hydrogen generation section will be described.

### (Relationship between Temperature and Resistance Value of Cell Stack)

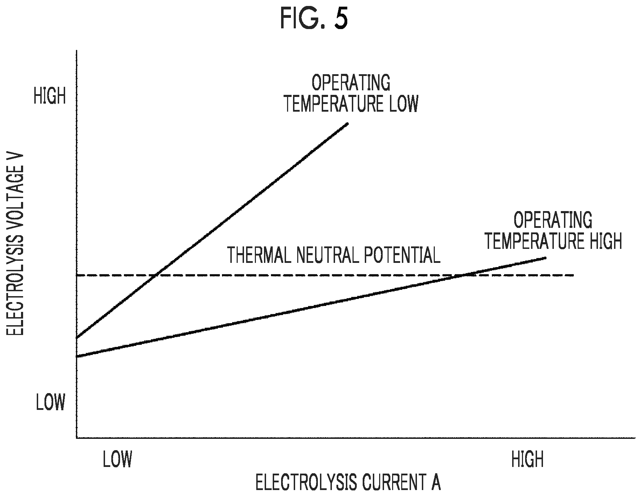

FIG. 5 shows a relationship between the operating temperature of the cell stack and IV characteristics. In FIG. 5, the horizontal axis represents an electrolysis current (A) passed through the cell stack, and the vertical axis represents an electrolysis voltage (V). The slope of each straight line represents resistance. The larger the slope, the greater the resistance. The "thermal neutral potential" is an electric potential at which an amount of heat absorbed by the electrolysis reaction and an amount of heat generated by an internal resistance of the electrolysis cell during the electrolysis reaction are balanced. In order to maintain high energy efficiency of hydrogen conversion, it is generally preferable that the electrolysis voltage is low (close to a thermal neutral voltage).

When the electrolysis current of the cell stack increases, the electrolysis voltage also increases. When the electrolysis current is the same, the lower the temperature of the cell stack, the higher the electrolysis voltage. That is, when the temperature of the cell stack is low, the internal resistance of the electrolysis cell increases, a cell voltage required for hydrogen generation at the same flow rate increases, and internal heat generation increases, so that energy efficiency of hydrogen conversion decreases. Therefore, it can be understood that, in order to increase the hydrogen generation amount and increase the energy efficiency of hydrogen conversion, it is preferable to increase the operating temperature of the cell stack and increase the electrolysis current while maintaining the electrolysis voltage near the thermal neutral voltage.

### (Test 1)

Using the cell stack described in the above embodiment (Example 1) and a cell stack for comparison (Comparative Example 1), temperature distributions of the cell stack, supply steam, and oxidizing gas when the same current was passed were predicted.

Here, the length (L₂) of the hydrogen generation section was the same in Example 1 and Comparative Example 1. In addition, in Example 1, the heat transfer length (L₃) of the lower heat exchange section was set to 9 times the heat transfer length (L₁) of the upper heat exchange section; in Comparative Example 1, the heat transfer length (L₃) of the lower heat exchange section and the heat transfer length (L₁) of the upper heat exchange section were set to be the same.

In addition, in each calculation, the allowable value of the lower tube plate temperature was assumed to be 600°C, an upper limit of a current value at which the lower tube plate temperature was equal to or lower than the allowable value was obtained, and a hydrogen generation amount was calculated from the upper limit.

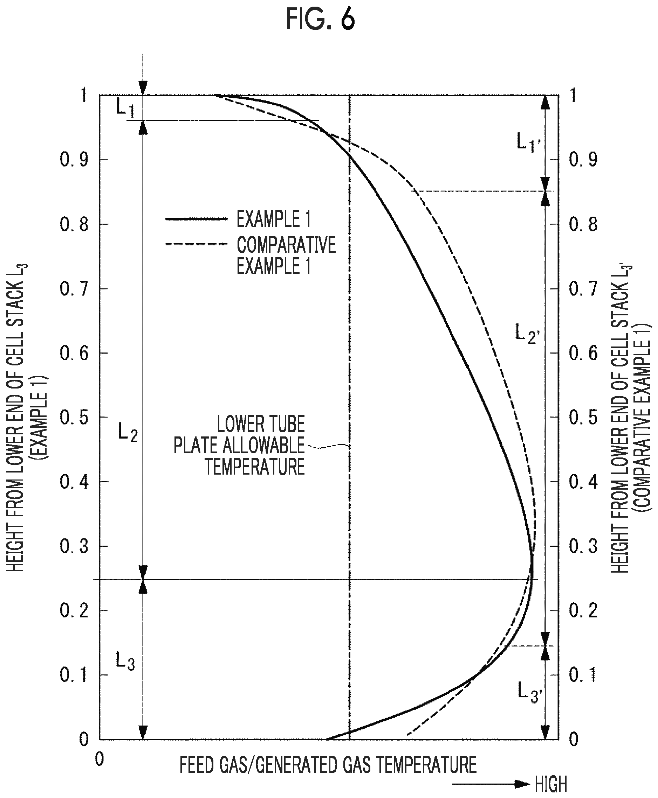

The results are shown in FIG. 6. In FIG. 6, the solid line represents the predicted temperature distribution of the feed gas/generated gas in Example 1, and the broken line represents the predicted temperature distribution of the feed gas/generated gas in Comparative Example 1. In Example 1, the temperature of generated hydrogen was highest at an end portion of the hydrogen generation section on the generated hydrogen outlet side. This tendency was similarly confirmed in Comparative Example 1.

On the other hand, when the steam supply temperature was the same in Example 1 and Comparative Example 1, the lower tube plate temperature (L₃ lower end temperature) in Example 1 was lower than the lower tube plate temperature (L_{3'} lower end temperature) in Comparative Example 1. From the result, it was found that, by making the heat transfer length of the lower heat exchange section longer than the heat transfer length of the upper heat exchange section, an increase in the lower tube plate temperature could be suppressed even when the hydrogen generation section length (L₂ and L_{2'}) and the total of the heat transfer lengths of the upper heat exchange section and the lower heat exchange section were the same. Both ends of the cell stack are held by holding members (upper tube plate and lower tube plate) made of a metallic material having high-temperature durability. However, since the durability of the holding members decreased due to oxidation when the holding members were exposed to a high temperature, it was necessary to design the heat transfer length of the lower heat exchange section such that the temperature of the lower tube plate was equal to or lower than the allowable temperature, so that the temperatures of the holding members did not exceed the allowable temperature.

### (Test 2)

Next, for each case in which the length (L₂) of the hydrogen generation section relative to the effective length (L) of the electrolysis cell stack was changed to 0.9, 0.8, 0.7, 0.6, or 0.5, the effect of the ratio between the heat transfer length (L₁) of the upper heat exchange section and the heat transfer length (L₃) of the lower heat exchange section on the performance of the electrolysis cell (hydrogen generation amount) was evaluated.

The diameter of the substrate tube used in the cell stack was uniform in the longitudinal direction, and the widths of the plurality of electrolysis cells in the hydrogen generation section were all the same. In addition, the number of elements was assumed to be proportional to the hydrogen generation section length (L₂) of the cell stack, and the hydrogen generation amount was calculated from the electrolysis current of each element and the number of elements.

The temperature distribution of the lower tube plate was predicted based on a heat balance calculation of an element resistance value of the hydrogen generation section at each temperature in the gas flow direction, an amount of heat generated by current, and an amount of heat exchanged in the heat transfer sections of the upper heat exchange section and the lower heat exchange section, and a current value at which the lower tube plate temperature became the allowable value (600°C) was obtained in the same manner as in Test 1. The calculation conditions are as follows.
Average electrolysis voltage: 1.5 V
Maximum allowable temperature of cell stack: 950°C
Maximum allowable temperature of lower tube plate: 600°C
Supply steam composition: 90% H₂O; 10% H₂
Steam utilization rate: 70%
Oxidizing gas utilization rate: 30%
Cell stack effective section length (L = sum of L₁, L₂, and L₃): 1 (= constant)

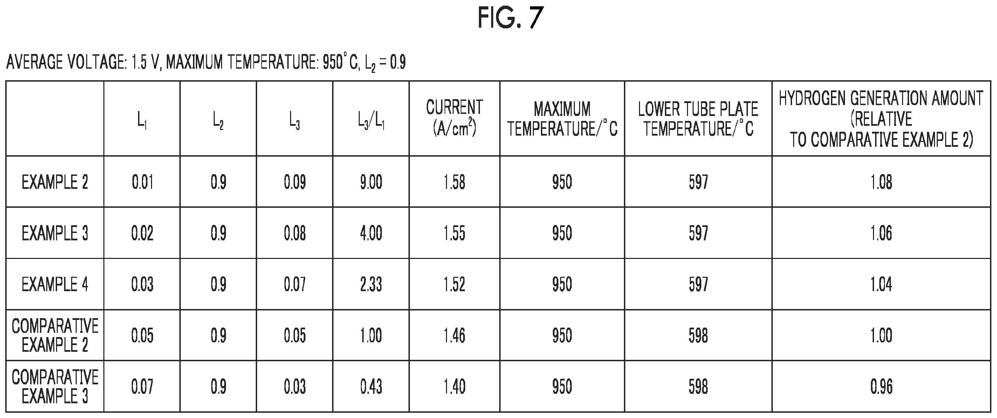

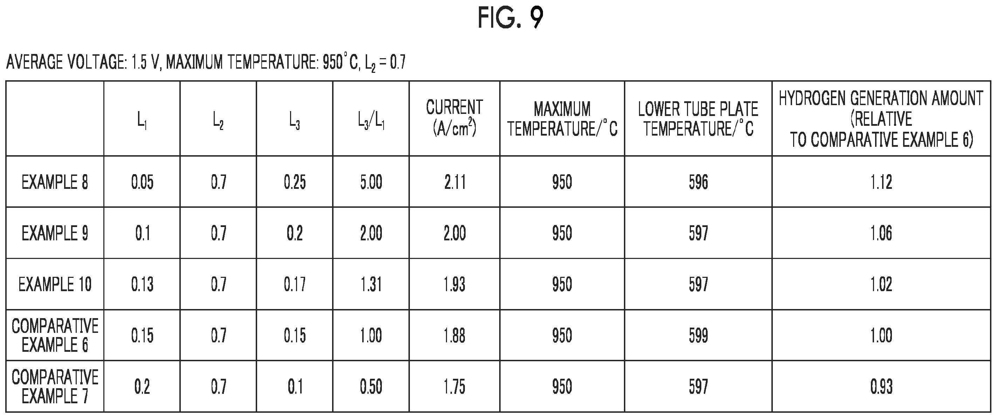

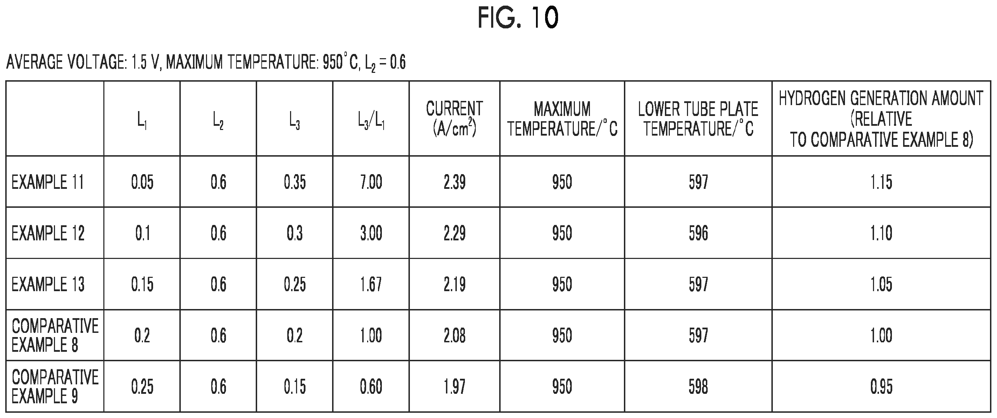

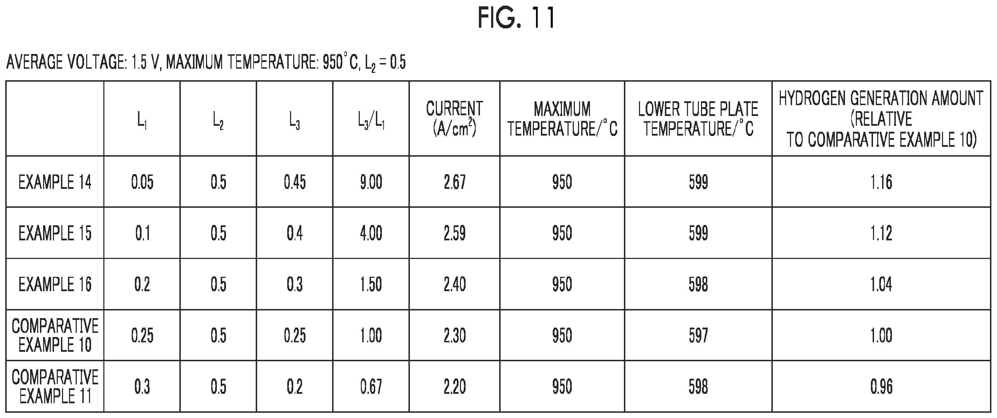

FIGS. 7 to 11 show calculation results obtained by performing performance prediction while varying the ratio between the heat transfer length (L₁) of the upper heat exchange section and the heat transfer length (L₃) of the lower heat exchange section for cases in which the length (L₂) of the hydrogen generation section is 0.9, 0.8, 0.7, 0.6, and 0.5. In addition, the hydrogen generation amount was shown as a relative ratio with reference to the hydrogen generation amount at L₃/L₁ = 1 in each case.

In Examples 2 to 16, the heat transfer length (L₃) of the lower heat exchange section was longer than the heat transfer length (L₁) of the upper heat exchange section. In Comparative Examples 2, 4, 6, 8, and 10, the heat transfer length (L₃) of the lower heat exchange section and the heat transfer length (L₁) of the upper heat exchange section were equal to each other. In Comparative Examples 3, 5, 7, 9, and 11, the heat transfer length (L₃) of the lower heat exchange section was shorter than the heat transfer length (L₁) of the upper heat exchange section.

According to FIG. 7, the hydrogen generation amounts in Examples 2 to 4 (L₁ < L₃), in which the heat transfer length of the lower heat exchange section was longer than the heat transfer length of the upper heat exchange section, were higher than those in Comparative Examples 2 and 3, in which L₁ = L₃. The hydrogen generation amount increased as the ratio (L₃/L₁) of the heat transfer length of the lower heat exchange section to the heat transfer length of the upper heat exchange section increased. The hydrogen generation amount in Comparative Example 3 (L₁ > L₃), in which the heat transfer length of the upper heat exchange section was longer than the heat transfer length of the lower heat exchange section, was lower than that in Comparative Example 2, in which L₁ = L₃.

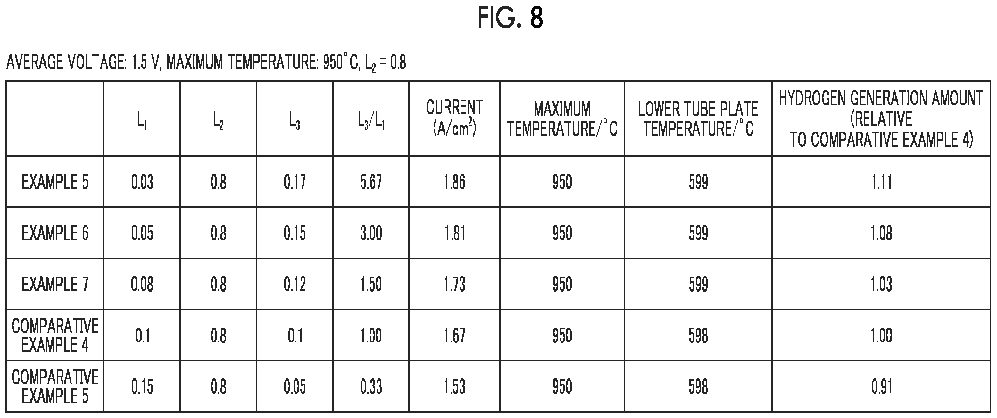

The same tendency was also shown in FIGS. 8 to 11.

According to FIGS. 7 to 11, an increase in the amount of hydrogen generated per cell stack was confirmed in Examples in which the proportion of the heat transfer length (L₃) of the lower heat exchange section to the effective section length (L) of the cell stack was 0.07 or more and 0.45 or less.

According to FIGS. 7 to 11, an increase in the amount of hydrogen generated per cell stack was confirmed in Examples in which the ratio (L₃/L₁) of the length (L₃) of the lower heat exchange section to the length (L₁) of the upper heat exchange section was more than 1 and 9 or less.

Comparing FIGS. 7 to 11, the current density increases as the length (L₂) of the hydrogen generation section becomes shorter. However, when the length of the hydrogen generation section becomes shorter, the number of cells included in the hydrogen generation section decreases. Therefore, considering the change in the number of cells, reducing L₂ decreases the amount of hydrogen generated per cell stack.

FIG. 12 shows the hydrogen generation amounts determined in FIGS. 7 to 11, organized by the ratio (L₃/L₁) of the heat transfer length (L₃) of the lower heat exchange section to the heat transfer length (L₁) of the upper heat exchange section, with the hydrogen generation amount in Comparative Example 2, in which the length (L₂) of the hydrogen generation section was 0.9 and the ratio (L₃/L₁) of the heat transfer length (L₃) of the lower heat exchange section to the heat transfer length (L₁) of the upper heat exchange section was 1.0, set as 1.

According to FIG. 12, it was confirmed that, overall, by making the length (L₃) of the lower heat exchange section longer than the length (L₁) of the upper heat exchange section, the amount of hydrogen generated per cell stack increases compared with Comparative Example 2 used as a reference. When the proportion (L₃/L₁) of the heat transfer length (L₃) of the lower heat exchange section to the heat transfer length (L₁) of the upper heat exchange section is 2 or more, the increase in the hydrogen generation amount is large; and the ratio is more preferably 3 or more and 9 or less, and still more preferably 3 or more and 7 or less.

The electrolysis cell stack, electrolysis cell cartridge, electrolysis cell module, and method for manufacturing an electrolysis cell stack described in the embodiments above can be understood, for example, as follows.

The electrolysis cell stack (101) according to a first aspect of the present disclosure includes: a hydrogen generation section (10) that includes an electrolysis cell (105) having a cathode (109) containing Ni, an anode (113), and a solid electrolyte (111) sandwiched between the cathode and the anode; a feed gas supply port (11) that supplies a feed gas to the cathode of the hydrogen generation section; a hydrogen gas exhaust port (12) that exhausts a hydrogen gas generated in the hydrogen generation section; a feed gas supply-side heat exchange section (13) in which the feed gas and an oxidizing gas supplied to the anode side exchange heat, the feed gas supply-side heat exchange section being provided on a side closer to the feed gas supply port than the hydrogen generation section; and a hydrogen gas exhaust-side heat exchange section (14) in which the hydrogen gas and an oxidizing gas supplied to the anode side exchange heat, the hydrogen gas exhaust-side heat exchange section being provided on a side closer to the hydrogen gas exhaust port than the hydrogen generation section, wherein the feed gas supply-side heat exchange section and the hydrogen gas exhaust-side heat exchange section each include a heat transfer section and a header section, and wherein a heat transfer area of the hydrogen gas exhaust-side heat exchange section is larger than a heat transfer area of the feed gas supply-side heat exchange section.

By making the heat transfer area of the hydrogen gas exhaust-side heat exchange section larger than the heat transfer area of the feed gas supply-side heat exchange section, heat exchange between hydrogen gas generated in the hydrogen generation section and supplied oxidizing gas can be promoted. As a result, the temperature of the hydrogen gas exhausted from the hydrogen gas exhaust port can be kept lower than in a case where the heat transfer area of the feed gas supply-side heat exchange section and the heat transfer area of the hydrogen gas exhaust-side heat exchange section are the same.

The feed gas used for steam electrolysis is steam and does not cause a chemical reaction involving heat absorption in the feed gas supply-side heat exchange section. Therefore, unlike a case in which a feed gas containing methane gas or the like is supplied, there is no temperature decrease caused by an endothermic reaction, and the temperature of the feed gas increases even when the heat transfer area of the feed gas supply-side heat exchange section is smaller than the heat transfer area of the hydrogen gas exhaust-side heat exchange section. Accordingly, an inlet temperature of the electrolysis section of the electrolysis cell stack can be maintained. When the operating temperature is high, the internal resistance of the cell decreases, so the electrolysis voltage decreases and hydrogen generation efficiency improves.

An electrolysis cell stack according to a second aspect of the present disclosure is the electrolysis cell stack according to the first aspect, in which the ratio of the heat transfer area of the hydrogen gas exhaust-side heat exchange section to the heat transfer area of the feed gas supply-side heat exchange section is 2 or more.

In the electrolysis cell stack in which the ratio of the heat transfer area of the hydrogen gas exhaust-side heat exchange section to the heat transfer area of the feed gas supply-side heat exchange section is within the above-described range, the hydrogen generation amount increases compared with a conventional electrolysis cell stack in which the heat transfer area of the hydrogen gas exhaust-side heat exchange section and the heat transfer area of the feed gas supply-side heat exchange section are equal to each other.

An electrolysis cell stack according to a third aspect of the present disclosure is the electrolysis cell stack according to the first aspect or the second aspect, in which the ratio of the heat transfer area of the hydrogen gas exhaust-side heat exchange section to the heat transfer area of the feed gas supply-side heat exchange section is 3 or more and 9 or less.

In the electrolysis cell stack in which the ratio of the heat transfer area of the hydrogen gas exhaust-side heat exchange section to the heat transfer area of the feed gas supply-side heat exchange section is within the above-described range, the increase in the hydrogen generation amount is particularly large.

An electrolysis cell stack according to a fourth aspect of the present disclosure is the electrolysis cell stack according to any one of the first aspect to the third aspect, in which the ratio of the heat transfer length of the hydrogen gas exhaust-side heat exchange section to the heat transfer length of the feed gas supply-side heat exchange section is 2 or more.

The electrolysis cell cartridge (203) according to a fifth aspect of the present disclosure includes the electrolysis cell stack according to any one of the first aspect to the fourth aspect.

The electrolysis cell module (201) according to a sixth aspect of the present disclosure includes the electrolysis cell cartridge according to the fifth aspect.

A method for manufacturing an electrolysis cell stack according to a seventh aspect of the present disclosure includes: a hydrogen generation section that includes an electrolysis cell having a cathode containing Ni, an anode, and a soild electrolyte sandwiched between the cathode and the anode; a feed gas supply port that supplies a feed gas to the cathode of the hydrogen generation section; a hydrogen gas exhaust port that exhausts a hydrogen gas generated in the hydrogen generation section; a feed gas supply-side heat exchange section in which the feed gas and an oxidizing gas supplied to an anode side exchange heat, the feed gas supply-side heat exchange section being provided on a side closer to the feed gas supply port than the hydrogen generation section; and a hydrogen gas exhaust-side heat exchange section in which the hydrogen gas and an oxidizing gas supplied to the anode side exchange heat, the hydrogen gas exhaust-side heat exchange section being provided on a side closer to the hydrogen gas exhaust port than the hydrogen generation section, the method including forming the feed gas supply-side heat exchange section and the hydrogen gas exhaust-side heat exchange section such that the feed gas supply-side heat exchange section and the hydrogen gas exhaust-side heat exchange section each include a heat transfer section and a header section, and a heat transfer area of the hydrogen gas exhaust-side heat exchange section is larger than a heat transfer area of the feed gas supply-side heat exchange section.

### Reference Signs List

10: hydrogen generation section
11: steam supply port (feed gas supply port)
12: generated hydrogen outlet (hydrogen gas exhaust port)
13: upper heat exchange section (feed gas supply-side heat exchange section)
14: lower heat exchange section (hydrogen gas exhaust-side heat exchange section)
101: cell stack (electrolysis cell stack)
103: substrate tube
105: electrolysis cell
107: interconnector
109: cathode (fuel electrode)
111: solid electrolyte
113: anode
115: lead film
201: module (electrolysis cell module)
203: cartridge (electrolysis cell cartridge)
205: module vessel
207: steam supply pipe
207a: steam supply branch pipe
209: generated hydrogen exhaust pipe
209a: generated hydrogen exhaust branch pipe
215: steam electrolysis chamber
217: steam supply header
219: generated hydrogen exhaust header
221: oxidizing gas supply header
223: oxidizing gas exhaust header
225a: upper tube plate
225b: lower tube plate
227a: upper insulation board
227b: lower insulation board
229a: upper casing
229b: lower casing
231a: steam supply pipe
231b: generated hydrogen exhaust pipe
233a: oxidizing gas supply pipe
233b: oxidizing gas exhaust pipe
235a: oxidizing gas lower through portion
235b: oxidizing gas upper through portion
237a: upper seal member
237b: lower seal member
620: temperature measurement unit
L₁ (S₁): heat transfer section of upper heat exchange section (heat transfer area)
L₂ (S₂): hydrogen generation section (reaction area of hydrogen generation section)
L₃ (S₃): heat transfer section of lower heat exchange section (heat transfer area)

## Claims

1. An electrolysis cell stack comprising:
a hydrogen generation section that includes an electrolysis cell having a cathode containing nickel, an anode, and a solid electrolyte sandwiched between the cathode and the anode;
a feed gas supply port that supplies a feed gas to the cathode of the hydrogen generation section;
a hydrogen gas exhaust port that exhausts a hydrogen gas generated in the hydrogen generation section;
a feed gas supply-side heat exchange section in which the feed gas and an oxidizing gas exhausted from an anode side exchange heat, the feed gas supply-side heat exchange section being provided on a side closer to the feed gas supply port than the hydrogen generation section; and
a hydrogen gas exhaust-side heat exchange section in which the hydrogen gas and an oxidizing gas supplied to the anode side exchange heat, the hydrogen gas exhaust-side heat exchange section being provided on a side closer to the hydrogen gas exhaust port than the hydrogen generation section,
wherein the feed gas supply-side heat exchange section and the hydrogen gas exhaust-side heat exchange section each include a heat transfer section and a header section, and
a heat transfer area of the hydrogen gas exhaust-side heat exchange section is larger than a heat transfer area of the feed gas supply-side heat exchange section.

2. The electrolysis cell stack according to claim 1, wherein a ratio of the heat transfer area of the hydrogen gas exhaust-side heat exchange section to the heat transfer area of the feed gas supply-side heat exchange section is 2 or more.

3. The electrolysis cell stack according to claim 1, wherein a ratio of the heat transfer area of the hydrogen gas exhaust-side heat exchange section to the heat transfer area of the feed gas supply-side heat exchange section is 3 or more and 9 or less.

4. The electrolysis cell stack according to claim 1, wherein a ratio of a heat transfer length of the hydrogen gas exhaust-side heat exchange section to a heat transfer length of the feed gas supply-side heat exchange section is 2 or more.

5. An electrolysis cell cartridge comprising the electrolysis cell stack according to any one of claims 1 to 4.

6. An electrolysis cell module comprising the electrolysis cell cartridge according to claim 5.

7. A method for manufacturing an electrolysis cell stack, the electrolysis cell stack including:
a hydrogen generation section that includes an electrolysis cell having a cathode containing nickel, an anode, and a solid electrolyte sandwiched between the cathode and the anode;
a feed gas supply port that supplies a feed gas to the cathode of the hydrogen generation section;
a hydrogen gas exhaust port that exhausts a hydrogen gas generated in the hydrogen generation section;
a feed gas supply-side heat exchange section in which the feed gas and an oxidizing gas exhausted from an anode side exchange heat, the feed gas supply-side heat exchange section being provided on a side closer to the feed gas supply port than the hydrogen generation section; and
a hydrogen gas exhaust-side heat exchange section in which the hydrogen gas and an oxidizing gas supplied to the anode side exchange heat, the hydrogen gas exhaust-side heat exchange section being provided on a side closer to the hydrogen gas exhaust port than the hydrogen generation section,
the method comprising:
forming the feed gas supply-side heat exchange section and the hydrogen gas exhaust-side heat exchange section such that the feed gas supply-side heat exchange section and the hydrogen gas exhaust-side heat exchange section each include a heat transfer section and a header section, and
a heat transfer area of the hydrogen gas exhaust-side heat exchange section is larger than a heat transfer area of the feed gas supply-side heat exchange section.
